# EUROPEAN PATENT APPLICATION

(11) **EP 4 593 142 A1**
(43) Date of publication of application: **30.07.2025**
(21) Application number: 22968893.2
(22) Date of filing: 21.12.2022
(51) Int. Cl.: H01M 10/0567

(54) **ELECTROLYTE FOR SECONDARY BATTERY, SECONDARY BATTERY, BATTERY MODULE, BATTERY PACK, AND ELECTRIC DEVICE**

(71) Applicant: Contemporary Amperex Technology (Hong Kong) Limited, Central (HK)
(72) Inventor: CHEN, Shigang, Ningde, Fujian 352100 (CN); ZHANG, Xinxin, Ningde, Fujian 352100 (CN); GUO, Bingkun, Ningde, Fujian 352100 (CN); LI, Xiaolong, Ningde, Fujian 352100 (CN); YAO, Shikang, Ningde, Fujian 352100 (CN); ZHOU, Qicheng, Ningde, Fujian 352100 (CN)
(74) Representative: Frick, Robert
(86) International application number: PCT/CN2022/140702
(87) International publication number: WO 2024/130592

(57) **Abstract**

This application provides an electrolyte for secondary battery, a secondary battery, a battery module, a battery pack, and an electric apparatus. The electrolyte for secondary battery includes a fluoroether solvent and an additive, where the additive includes one or more of ionic liquid additive, amide compound additive, cation shielding additive, and alloy additive. In this application, with one or more of ionic liquid additive, amide compound additive, cation shielding additive, and alloy additive added in an electrolyte containing the fluoroether solvent, interface stability of the secondary battery is significantly enhanced, and the cycling performance, storage stability, and overall safety of the secondary battery are improved.

## Description

### TECHNICAL FIELD

This application relates to the field of secondary battery technologies, and in particular, to an electrolyte for secondary battery, a secondary battery, a battery module, and an electric apparatus.

### BACKGROUND

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace. With the widespread application of secondary batteries, higher requirements are being placed on their energy density, cycling performance, and other characteristics.

The electrolyte serves as a medium for ion transfer between the positive and negative electrodes. As an essential component of a secondary battery, it plays a crucial role in the rate performance, cycle life, and safety of the secondary battery. Liquid electrolytes, commonly referred to as electrolytes, typically possess excellent ion conductivity, endowing batteries with excellent kinetic performance. However, electrolytes have high reactivity, and are particularly prone to side reactions with the metal negative electrode, which hinders the effective improvement in the cycling performance and storage performance of batteries. Therefore, there is a need to further optimize the composition of the electrolyte to provide an electrolyte with stable electrochemical properties while capable of enhancing the overall electrochemical performance of the secondary battery.

### SUMMARY

This application is carried out in view of the preceding subject with a purpose to provide an electrolyte for secondary battery. With one or more of ionic liquid additive, amide compound additive, cation shielding additive, and alloy additive added in a fluoroether solvent, which is obtained by direct fluorine substitution of ether molecules, an electrolyte having stable electrochemical properties is provided. Secondary batteries prepared using this electrolyte exhibit improved interface stability, high-temperature performance, cycling performance, and storage stability.

A first aspect of this application provides an electrolyte for secondary battery, including a fluoroether solvent and an additive, where the additive includes one or more of ionic liquid additive, amide compound additive, cation shielding additive, and alloy additive. In any embodiment, the fluoroether solvent is obtained by directly substituting hydrogen bonded to carbon of the corresponding ether molecules with fluorine.

In any embodiment, a cation of the ionic liquid additive includes one or more of nitrogen-containing onium ion and phosphorus-containing onium ion; and an anion of the ionic liquid additive includes one or more of halogen ion, phosphate ion, borate ion, sulfonimide compound anion, and sulfonylamide compound anion.

With one or more of ionic liquid additive, amide compound additive, cation shielding additive, and alloy additive added in an electrolyte containing the fluoroether solvent, interface stability of the secondary battery can be significantly improved, and the cycling performance, storage stability, and overall safety of the secondary battery are enhanced.

In any embodiment, the cation of the ionic liquid additive includes one or more of 1-butyl-3-methylimidazolium, 1-benzyl-3-methylimidazolium, 3-methyl-1-ethoxycarbonylmethylimidazolium, 1-alkyl-3-methylimidazolium, 1-[(trimethylsilyl)methyl]benzotriazolium, N-alkyl-N-methylpiperidinium, 5-azoniumspiro[4.4]nonane, trihexyl(tetradecyl)phosphine ion, tetrabutylphosphine ion, and n-butyl-N-methylpyrrolidinium, and optionally 1-benzyl-3-methylimidazolium or 1-alkyl-3-methylimidazolium.

In any embodiment, the anion of the ionic liquid additive includes one or more of chloride ion, bromide ion, iodide ion, hexafluorophosphate, tetrafluoroborate, dicyandiamide anion, bis(fluorosulfonyl)amide anion, bis(trifluoromethylsulfonyl)amide anion, bis(fluorosulfonyl)imide anion, and bis(trifluoromethylsulfonyl)imide anion, and optionally one or more of chloride ion, bis(fluorosulfonyl)amide anion, bis(trifluoromethylsulfonyl)amide anion, bis(fluorosulfonyl)imide anion, and bis(trifluoromethylsulfonyl)imide anion.

In any embodiment, the ionic liquid additive includes one or more selected from 1-butyl-3-methylimidazole-bis(fluorosulfonyl)imide salt, 1-butyl-3-methylimidazole-bis(trifluoromethylsulfonyl)amide salt, 1-benzyl-3-methylimidazole-bis(fluorosulfonyl)imide salt, 1-benzyl-3-methylimidazole-bis(trifluoromethylsulfonyl)amide salt, 1-alkyl-3-methylimidazole-bis (fluorosulfonyl)imide salt, 1-alkyl-3-methylimidazole-bis(trifluoromethylsulfonyl)amide salt, 1-alkyl-3-methylimidazole-chloride salt, and N-alkyl-N-methylpiperidine-tetrafluoroborate.

In any embodiment, the amide compound additive includes one or more of compounds represented by formula I, formula II, or formula III, 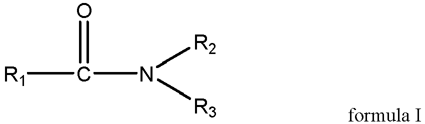 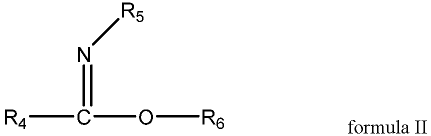 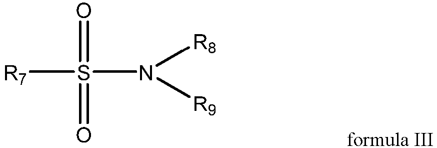 where R₁ to R₉ are each independently selected from hydrogen, silyl group, ketone carbonyl group, C₁ to C₃ alkyl group unsubstituted or substituted by at least one fluorine atom, and aryl group unsubstituted or substituted by at least one fluorine atom.

In any embodiment, the amide compound additive includes one or more of N,N-dimethylformamide, N,N-dimethylacetamide, N,N-dimethylacetoacetamide, 1,1,1-trifluorofluoro-N,N-dimethylform sulfonamide, N,O-bis(trimethylsilyl)trifluoroacetamide, 2,3,6-trifluorobenzenesulfonamide, N,N-dimethyl-4-fluorobenzenesulfonamide, and N-methyl-N-trimethylsilane trifluoroacetamide.

In any embodiment, the cation shielding additive includes a salt whose cation is an alkali metal element or an alkaline earth metal element.

In any embodiment, the cation shielding additive includes one or more of lithium nitrate, lithium perchlorate, lithium hexafluorophosphate, lithium tetrafluoroborate, lithium bisoxaloborate, lithium difluoroxaloborate, lithium bis(fluorosulfonyl)imide, lithium bis(trifluoromethanesulfonyl)imide, potassium hexafluorophosphate, potassium bis-oxaloborate, potassium difluoro-oxaloborate, potassium bis(fluorosulfonyl)imide, potassium bis(trifluoromethylsulfonyl)imide, cesium nitrate, cesium hexafluorophosphate, cesium bis(fluorosulfonyl)imide, cesium chloride, cesium bromide, calcium nitrate, strontium nitrate, and barium nitrate.

In any embodiment, the alloy additive is a compound containing an element from family IVA or family VA.

In any embodiment, the alloy additive includes one or more of antimony trifluoride, antimony pentafluoride, tin difluoride, tin tetrafluoride, bismuth trichloride, and fumed silica.

In any embodiment, a mass percentage of the additive is 1-10% based on total mass of the electrolyte.

When the mass percentage of the additive is 1-10% based on the total mass of the electrolyte, a stable SEI film can be formed at the interface between the negative electrode and the electrolyte. In addition, an effective barrier can be constructed at the interface electric double layer to prevent the shuttle of certain ions and free radicals in the electrolyte and side reactions. This enhances the interface stability, cycling performance, and storage stability of the battery.

In any embodiment, the fluoroether solvent includes a compound represented by formula IV or a crown ether substituted by a fluorine atom, 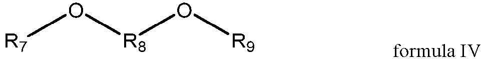 where R₇, R₈, and R₉ are each independently selected from hydrogen, and a straight-chain or branched-chain C₁-C₆ alkyl group unsubstituted or substituted by fluorine or a hydroxyl group, at least one of R₇, R₈, and R₉ contains a fluorine atom, and R₇ and R₉ optionally are combined with oxygen to which R₇ and R₉ are connected and R₈ connected to the oxygen, to generate a 5- or 6-membered saturated heterocyclic ring, where at least one hydrogen atom on the ring is substituted by fluorine or a fluoroalkyl group.

In any embodiment, the fluoroether solvent includes one or more of 2,2,3,3-tetrafluoro-1,4-dimethoxybutane, 2-(2-ethoxyethoxy)-1,1,1-trifluoroethane, 1,2-bis(2,2-difluoroethoxy)ethane, 2-(2-(2,2-difluoroethoxy)ethoxy)-1,1,1-trifluoroethane, 1,2-bis(2,2,2-trifluoroethoxy)ethane, 1,1,1,3,3,3-hexafluoroisopropylmethyl ether, 2,2,2-trifluoroethyl-1,1,2,3,3,3-hexafluoropropyl ether, 2,2-bis(trifluoromethyl)-1,3-dioxolane, 2,2-dimethoxy-4-(Trifluoromethyl)-1,3-dioxopentane, 2-ethoxy-4-(trifluoromethyl)-1,3-dioxopentane, octafluorotetrahydrofuran, ethylene glycol dimethyl ether substituted by at least one fluorine atom, diethylene glycol dimethyl ether substituted by at least one fluorine atom, triethylene glycol dimethyl ether substituted by at least one fluorine atom, tetraethylene glycol dimethyl ether substituted by at least one fluorine atom, diethylene glycol diethyl ether substituted by at least one fluorine atom, diisopropyl ether substituted by at least one fluorine atom, dibutyl ether substituted by at least one fluorine atom, diethylene glycol dibutyl ether substituted by at least one fluorine atom, 1,4-diethoxybutane substituted by at least one fluorine atom, 15-crown ether-5 substituted by at least one fluorine atom, 12-crown ether-4 substituted by at least one fluorine atom, and 18-crown ether-6 substituted by at least one fluorine atom; and optionally at least one of 2,2,3,3-tetrafluoro-1,4-dimethoxybutane, 2,2-dimethoxy-4-(trifluoromethyl)-1,3-dioxopentane.

In any embodiment, a mass percentage of the fluoroether solvent is 20%-90% based on the total mass of the electrolyte.

In any embodiment, an electrolytic salt is a sodium salt, where the sodium salt includes one or more of sodium nitrate, sodium perchlorate, sodium hexafluorophosphate, sodium tetrafluoroborate, sodium tetrafluoroyttrate, sodium hexafluoroarsenate, sodium acetate, sodium trifluoroacetate, sodium bisoxaloborate, sodium difluoroxaloborate, tetrafluoroborate sodium phenylborate, sodium trifluoromethanesulfonate, sodium bis(fluorosulfonyl)imide, sodium bis(trifluoromethanesulfonyl)imide, and sodium (n-perfluorobutylsulfonyl)imide.

In any embodiment, a mass percentage of the electrolytic salt is 2%-70%, optionally 20%-70%, based on the total mass of the electrolyte.

When the mass percentage of the electrolytic salt is 2%-70% based on the total mass of the electrolyte, a stable SEI film can be formed at the interface between the negative electrode and the electrolyte. In addition, an effective barrier can be constructed at the interface electric double layer to prevent the shuttle of ions and free radicals and side reactions, enhancing the interface stability of the battery.

A second aspect of this application provides a secondary battery, including the electrolyte according to the first aspect.

In any embodiment, the secondary battery includes one or more of lithium metal battery and sodium metal battery.

In any embodiment, the secondary battery is a sodium metal battery with no negative electrode.

In any embodiment, the secondary battery includes a positive electrode plate, where the positive electrode plate includes a positive electrode active material, and the positive electrode active material includes one or more of Prussian blue compound, polyanionic compound, and layered oxide.

In any embodiment, a surface of particles of the positive electrode active material is provided with a coating layer, where the coating layer includes one or more of carbon material (amorphous graphite, graphen), polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride.

The coating layer on the surface of positive electrode active material particles can prevent the occurrence of side reactions caused by direct contact between the surface of positive metal and the electrolyte. It also suppresses the dissolution of transition metals from the positive electrode and enhances the stability of the electrode/electrolyte interface.

In any embodiment, the coating layer has a thickness of 2 nm-1000 nm.

In any embodiment, the secondary battery includes a negative electrode plate, where the negative electrode plate includes a negative electrode current collector and a primer layer provided on at least one surface of the negative electrode current collector, and the primer layer includes one or more of carbon nanotube, graphite, graphene, silver composite carbon nanoparticle, and tin composite carbon nanoparticle.

In any embodiment, the negative electrode current collector includes at least one of metal foil, metal foam current collector, metal mesh current collector, carbon felt current collector, carbon cloth current collector, carbon paper current collector, and composite current collector.

In any embodiment, the primer layer has an areal density of 2 g/m²-50 g/m².

In any embodiment, the primer layer has a thickness of 1 µm-100 µm.

A third aspect of this application provides a battery module, including the secondary battery according to the second aspect.

A fourth aspect of this application provides a battery pack, including the secondary battery according to the second aspect or the battery module according to the third aspect.

A fifth aspect of this application provides an electric apparatus, including at least one of the secondary battery according to the second aspect, the battery module according to the third aspect, or the battery pack according to the fourth aspect.

### BRIEF DESCRIPTION OF DRAWINGS

FIG. 1 is a schematic diagram of a secondary battery according to an embodiment of this application;
FIG. 2 is an exploded view of the secondary battery according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4; and
FIG. 6 is a schematic diagram of an electric apparatus using a secondary battery as a power source according to an embodiment of this application.

### Reference signs:

1. battery pack; 2. upper box body; 3. lower box body; 4. battery module; 5. secondary battery; 51. housing; 52. electrode assembly; and 53. cover plate.

### DESCRIPTION OF EMBODIMENTS

The following specifically discloses in detail embodiments of the binder, preparation method thereof, electrode, battery, and electric apparatus of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Ether solvents are commonly used in electrolytes for secondary batteries. However, ether solvents cannot be paired with all positive electrode active materials, especially layered oxides with high energy density and high working potential. The applicant has fortuitously discovered that fluorinated ether solvents, namely fluoroether solvents, can effectively increase the absolute value of highest occupied molecular orbital (value of HOMO) of ether compounds, widens the electrochemical stability window of the electrolyte, and is able to pair with positive electrode materials with high operating potential, thereby improving the operating voltage of the battery. However, the direct application of fluoroether solvents in secondary batteries, especially in batteries with no negative electrode, still faces challenges such as poor cycling and storage performances.

### [Electrolyte for secondary battery]

Based on this, this application provides an electrolyte for secondary battery, where the electrolyte for secondary battery includes a fluoroether solvent and an additive, where the additive includes one or more of ionic liquid additive, amide compound additive, cation shielding additive, and alloy additive.

In this document, "fluoroether solvent" is a solvent generated by directly fluorinating ether solvent molecules. Unlike typical fluoroether inert diluents, the fluoroether solvent in this application is used as the main solvent in the electrolyte.

In this document, the term "additive" refers to a component in the electrolyte that is present in a smaller quantity and may be a gas, liquid, or solid. Conceptually, the distinction among an additive, a main solvent, and an electrolytic salt lies only in their different proportions in the electrolyte. A solvent or salt with a smaller proportion can be collectively referred to as an additive.

In this document, the term "ionic liquid additive" refers to a salt added to the electrolyte in a smaller proportion, fully consisting of cations and anions, and exhibiting a liquid state at or near room temperature. Room temperature refers to 25°C ± 5°C.

In this document, the term "amide compound additive" refers to a compound added to the electrolyte in a smaller proportion, containing 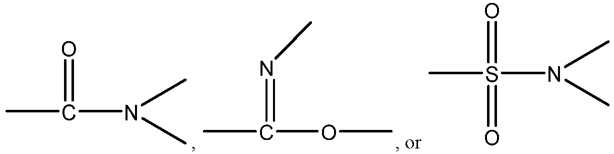 group.

In this document, the term "cation shielding additive" refers to a salt added to the electrolyte in a smaller proportion, capable of ionizing into cations. These cations play a role in excluding shuttle ions and free radicals that cause side reactions at the double-layer interface of the negative electrode.

In this document, the term "alloy additive" refers to a compound added to the electrolyte in a smaller proportion, containing an element capable of generating an alloy, within the SEI film, with the metal cations in the electrolytic salt.

In some embodiments, the additive includes an ionic liquid additive. In some embodiments, the additive includes an amide compound additive. In some embodiments, the additive includes a cation shielding additive. In some embodiments, the additive includes an alloy additive. In some embodiments, the additive is a mixture of an ionic liquid additive and an amide compound additive. In some embodiments, the additive is a mixture of an ionic liquid additive and a cation shielding additive. In some embodiments, the additive is a mixture of an ionic liquid additive and an alloy additive. In some embodiments, the additive is a mixture of an amide compound additive and an alloy additive. In this application, with one or more of ionic liquid additive, amide compound additive, cation shielding additive, and alloy additive added in an electrolyte containing the fluoroether solvent, the occurrence of side reactions between the metal negative electrode and the electrolyte and the generation of unstable and fragile solid electrolyte interface (SEI) film can be suppressed, thereby significantly enhancing the interface stability of the secondary battery, and improving the cycling performance, storage stability, and overall safety of the secondary battery.

In some embodiments, a cation of the ionic liquid additive includes one or more of nitrogen-containing onium ion and phosphorus-containing onium ion. An anion of the ionic liquid additive includes one or more of halogen ion, phosphate ion, borate ion, sulfonimide compound anion, and sulfonylamide compound anion.

In some embodiments, the cation of the ionic liquid additive includes one or more of 1-butyl-3-methylimidazolium, 1-benzyl-3-methylimidazolium, 3-methyl-1-ethoxycarbonylmethylimidazolium, 1-alkyl-3-methylimidazolium, 1-[(trimethylsilyl)methyl]benzotriazolium, N-alkyl-N-methylpiperidinium, 5-azoniumspiro[4.4]nonane, trihexyl(tetradecyl)phosphine ion, tetrabutylphosphine ion, and n-butyl-N-methylpyrrolidinium, and optionally 1-benzyl-3-methylimidazolium or 1-alkyl-3-methylimidazolium.

In some embodiments, the anion of the ionic liquid additive includes one or more of chloride ion, bromide ion, iodide ion, hexafluorophosphate, tetrafluoroborate, dicyandiamide anion, bis(fluorosulfonyl)amide anion, bis(trifluoromethylsulfonyl)amide anion, bis(fluorosulfonyl)imide anion, and bis(trifluoromethylsulfonyl)imide anion, and optionally one or more of chloride ion, bis(fluorosulfonyl)amide anion, bis(trifluoromethylsulfonyl)amide anion, bis(fluorosulfonyl)imide anion, and bis(trifluoromethylsulfonyl)imide anion.

In some embodiments, the ionic liquid additive includes one or more selected from 1-butyl-3-methylimidazole-bis(fluorosulfonyl)imide salt, 1-butyl-3-methylimidazole-bis(trifluoromethylsulfonyl)amide salt, 1-benzyl-3-methylimidazole-bis(fluorosulfonyl)imide salt, 1-benzyl-3-methylimidazole-bis(trifluoromethylsulfonyl)amide salt, 1-alkyl-3-methylimidazole-bis (fluorosulfonyl)imide salt, 1-alkyl-3-methylimidazole-bis(trifluoromethylsulfonyl)amide salt, 1-alkyl-3-methylimidazole-chloride salt, and N-alkyl-N-methylpiperidine-tetrafluoroborate.

With an ionic liquid additive, especially an ionic liquid containing bis(fluorosulfonyl)imine and bis(trifluoromethylsulfonyl)imine, added to the fluoroether solvent, the SEI film generated at the negative electrode can be strengthened, reducing direct reactions between the negative electrode and fluoroether solvent molecules or free radicals. In addition, the ionic liquid additive can play a role of excluding solvent molecules at the electric double layer between the negative electrode and the electrolyte, further reducing direct reactions between the negative electrode and fluoroether solvent molecules or radicals, synergistically enhancing the stability at the interface between the negative electrode and electrolyte, and further improving the cycling and storage performance of the battery at room temperature and high temperatures. In some embodiments, the amide compound additive includes one or more compounds represented by formula I, formula II, or formula III, 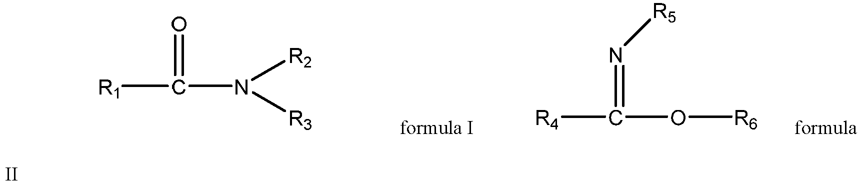 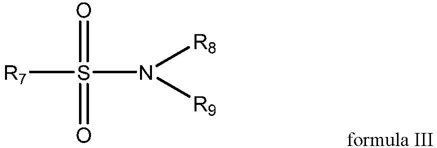 where R₁ to R₉ are each independently selected from hydrogen, silyl group, ketone carbonyl group, C₁-C₃ alkyl group unsubstituted or substituted by at least one fluorine atom, and aryl group unsubstituted or substituted by at least one fluorine atom.

In this document, the term "silyl group" refers to -Si(R₁₀)(R₁₁)(R₁₂) group, where R₁₀, R₁₁, and R₁₂ are each independently selected from hydrogen and substituted or unsubstituted C₁₋₃ alkyl group. In an example, the silyl group includes, but is not limited to, -SiH₃ and -Si(CH₃)₃.

In this document, the term "ketone carbonyl group" is an -R-CO-R'- group, where both R and R' are hydrocarby groups.

In this document, the term "aryl group" refers to an aromatic ring system in which at least one ring is aromatic, including but not limited to phenyl, biphenyl, indanyl, 1-naphthyl, 2-naphthyl, and tetrahydronaphthyl.

In this document, the term "C₁₋₃ alkyl group" is a straight-chain or branched hydrocarbon chain group consisting of only carbon and hydrogen atoms, without unsaturation, having from one to three carbon atoms, and attached to the rest of the molecule via a single bond.

In this document, the term"substituted" refers to at least one hydrogen atom of the compound or chemical moiety being replaced by another chemical moiety or a substituent, where the substituent is independently selected from hydroxy group, mercapto group, amino group, cyano group, nitro group, aldehyde group, halogen atom, alkenyl group, alkynyl group, aryl group, heteroaryl group, C₁₋₆ alkyl group, and C₁₋₆ alkoxy group.

In some embodiments, the amide compound additive includes one or more of N,N-dimethylformamide, N,N-dimethylacetamide, N,N-dimethylacetoacetamide, 1,1,1-trifluorofluoro-N,N-dimethylform sulfonamide, N,O-bis(trimethylsilyl)trifluoroacetamide, 2,3,6-trifluorobenzenesulfonamide, N,N-dimethyl-4-fluorobenzenesulfonamide, and N-methyl-N-trimethylsilane trifluoroacetamide.

When the amide compound additive is added to the fluoroether solvent, the SEI film generated at the negative electrode will contain an inorganic nitride. The presence of the inorganic nitride improves film stability, thereby significantly enhancing the electrochemical stability of the battery. In addition, some amide compound additives have Lewis basicity and can coordinate with Lewis acidic species in the fluoroether solvent, preventing further reactions between Lewis acidic components in the electrolyte and the negative electrode. This further enhances the stability of the negative electrode interface of the battery. Through the foregoing effects, amide compound additives can significantly improve the cycling and storage performances of secondary batteries, especially metal batteries (including batteries with no negative electrode).

In some embodiments, the cation shielding additive includes a salt whose cation is an alkali metal element or an alkaline earth metal element.

In this document, alkali metal elements refer to the metal elements of family IA in the periodic table of elements, excluding hydrogen (H). In some embodiments, the cation shielding additive includes lithium, potassium, or cesium.

In this document, alkaline earth metal elements refer to the metal elements of family IIA in the periodic table of elements. In some embodiments, the cation shielding additive includes calcium, strontium, or barium.

In some embodiments, the cation shielding additive includes one or more of lithium nitrate, lithium perchlorate, lithium hexafluorophosphate, lithium tetrafluoroborate, lithium bisoxaloborate, lithium difluoroxaloborate, lithium bis(fluorosulfonyl)imide, lithium bis(trifluoromethanesulfonyl)imide, potassium hexafluorophosphate, potassium bis-oxaloborate, potassium difluoro-oxaloborate, potassium bis(fluorosulfonyl)imide, potassium bis(trifluoromethylsulfonyl)imide, cesium nitrate, cesium hexafluorophosphate, cesium bis(fluorosulfonyl)imide, cesium chloride, cesium bromide, calcium nitrate, strontium nitrate, and barium nitrate.

With the cation shielding additive added in the fluoroether solvent, a cation different from metal ions in the electrolyte salt can be introduced. The cation in the cation shielding additive can not only exclude, through the double electric layer at the negative electrode interface, shuttle ions and free radicals that cause side reactions, but also guide the uniform deposition and stripping of metal ions of the electrolytic salt at the negative electrode. Moreover, some anions contained in the cation shielding additive can also increase the inorganic components in the SEI film and stabilize the SEI, thereby further enhancing the negative electrode interface stability of the battery and improving the cycling and storage performances of a secondary battery, especially a metal battery (including a battery with no negative electrode). In some embodiments, the alloy additive is a compound containing an element from family IVA or family VA.

In some embodiments, the alloy additive includes one or more of antimony trifluoride, antimony pentafluoride, tin difluoride, tin tetrafluoride, bismuth trichloride, and fumed silica.

In this paper, the term "fumed silica (Fumed silica)", also known as fumed white carbon black, is an amorphous nano-silica particle.

When a foregoing alloy additive is added to the fluoroether electrolyte, a double layer SEI film is formed at the negative electrode. One layer of the SEI film is rich in alloy components formed by IVA or VA group elements in conjunction with sodium, while the other layer of the SEI film is rich in inorganic substances such as sodium fluoride. This not only enhances the stability of the SEI film but also suppresses dendrite formation at the negative electrode, thereby improving the cycling performance and storage stability of the secondary battery. Additionally, it reduces gas generated and contributes to overall battery safety.

In some embodiments, a mass percentage of the additive is 1-10% based on total mass of the electrolyte.

In some embodiments, the mass percentage of the additive is optionally 1%, 2%, 3%, 4%, 5%, 6%, 7%, 8%, 9%, and 10% based on the total mass of the electrolyte.

When the mass percentage of the additive is 1-10% based on the total mass of the electrolyte, a stable SEI film can be generated at the interface between the negative electrode and the electrolyte, and the ion transport in the battery will not be affected due to excessively thick SEI film, thus improving the comprehensive performance of the battery.

In some embodiments, the ether solvent is a fluoroether solvent, and the fluoroether solvent includes a compound represented by formula IV or a crown ether substituted by a fluorine atom or a fluoroalkyl group, 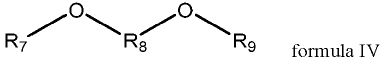 where R₇, R₈, and R₉ are each independently selected from hydrogen, and a straight-chain or branched-chain C₁-C₆ alkyl group unsubstituted or substituted by fluorine or a hydroxyl group, at least one of R₇, R₈, and R₉ contains a fluorine atom, and R₇ and R₉ optionally are combined with oxygen to which R₇ and R₉ are connected and R₈ connected to the oxygen, to generate a 5- or 6-membered saturated heterocyclic ring, where at least one hydrogen atom on the ring is substituted by fluorine or a fluoroalkyl group.

In this document, the term "C₁₋₆ alkyl group" can be understood with reference to the definition of the term "C₁₋₃ alkyl".

In this document, "fluoroalkyl group" refers to an alkyl group containing at least one fluorine atom.

In some embodiments, the fluoroether solvent includes one or more of 2,2,3,3-tetrafluoro-1,4-dimethoxybutane (FDMB, 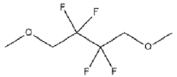 ), 2-(2-ethoxyethoxy)-1,1,1-trifluoroethane (F3DEE, 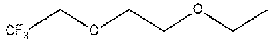 ) , 1,2-bis(2,2-difluoroethoxy)ethane (F4DEE, 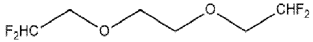 ), 2-(2-(2,2-difluoroethoxy)ethoxy)-1,1,1-trifluoroethane (F5DEE, 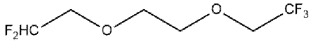 ), 1,2-bis(2,2,2-trifluoroethoxy)ethane (F6DEE, 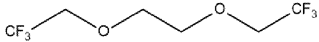 ) , 1,1,1,3,3,3-hexafluoroisopropylmethyl ether, 2,2,2-trifluoroethyl-1,1,2,3,3,3-hexafluoropropyl ether, 2,2-bis(trifluoromethyl)-1,3-dioxolane, 2,2-dimethoxy-4-(Trifluoromethyl)-1,3-dioxopentane, 2-ethoxy-4-(trifluoromethyl)-1,3-dioxopentane, octafluorotetrahydrofuran, ethylene glycol dimethyl ether substituted by at least one fluorine atom, diethylene glycol dimethyl ether substituted by at least one fluorine atom, triethylene glycol dimethyl ether substituted by at least one fluorine atom, tetraethylene glycol dimethyl ether substituted by at least one fluorine atom, diethylene glycol diethyl ether substituted by at least one fluorine atom, diisopropyl ether substituted by at least one fluorine atom, dibutyl ether substituted by at least one fluorine atom, diethylene glycol dibutyl ether substituted by at least one fluorine atom, 1,4-diethoxybutane substituted by at least one fluorine atom, 15-crown ether-5 substituted by at least one fluorine atom, 12-crown ether-4 substituted by at least one fluorine atom, and 18-crown ether-6 substituted by at least one fluorine atom; and optionally at least one of 2,2,3,3-tetrafluoro-1,4-dimethoxybutane, and 2,2-dimethoxy-4-(trifluoromethyl)-1,3-dioxopentane.

The direct fluorination modification of ether molecules can increase the absolute value of the highest occupied molecular orbital (HOMO) of the ether, thereby widening the electrochemical stability window of the corresponding electrolyte after the electrolytic salt is dissolved. This enhances the electrochemical stability of the electrolyte, allowing the electrolyte to be paired with positive electrode active materials with higher potential, and improving the use voltage of the secondary battery.

In some embodiments, a mass percentage of the fluoroether solvent is 20%-90% based on the total mass of the electrolyte.

In some embodiments, the mass percentage of the fluoroether solvent is 20%, 25%, 30%, 35%, 40%, 45%, 50%, 55%, 60%, 65%, 70%, 75%, 80%, 85%, and 90% based on the total mass of the electrolyte.

Unlike using the fluoroether solvent as an inert diluent, incorporating the fluoroether solvent in the electrolyte with a higher mass percentage as the primary solvent can effectively enhance the electrochemical stability of the electrolyte. This allows the electrolyte to be paired with cathode active materials with higher potentials, thereby boosting the use voltage of the secondary battery.

In some embodiments, an electrolytic salt is a sodium salt, where the sodium salt includes one or more of sodium nitrate, sodium perchlorate, sodium hexafluorophosphate, sodium tetrafluoroborate, sodium tetrafluoroyttrate, sodium hexafluoroarsenate, sodium acetate, sodium trifluoroacetate, sodium bisoxaloborate, sodium difluoroxaloborate, tetrafluoroborate sodium phenylborate, sodium trifluoromethanesulfonate, sodium bis(fluorosulfonyl)imide, sodium bis(trifluoromethanesulfonyl)imide, and sodium (n-perfluorobutylsulfonyl)imide.

In some embodiments, a mass percentage of the electrolytic salt is 2%-70%, optionally 20%-70%, based on the total mass of the electrolyte.

In some embodiments, the mass percentage of the electrolytic salt is 2%, 5%, 10%, 15%, 20%, 25%, 30%, 35%, 40%, 45%, 50%, 55%, 60%, 65%, and 70%, based on the total mass of the electrolyte.

When the mass percentage of the electrolytic salt is 2% to 70% based on the total mass of the electrolyte, all the electrolytes provided in this application can effectively improve the chemical stability and cycling and storage performances of the battery. When the mass percentage of the electrolytic salt is 20%-70% based on the total mass of the electrolyte, high concentration of electrolytic salt can further reduce the free solvent molecules in the solvent, mitigate the side reactions between the solvent and the negative electrode, and improve the cycling performance, storage performance, and high temperature performance of the battery.

### [Secondary battery]

In some embodiments, the secondary battery includes the foregoing electrolyte.

In some embodiments, the secondary battery is a lithium metal battery or a sodium metal battery.

A lithium metal battery is a battery whose negative electrode is made of lithium metal, and lithium ions are used to migrate back and forth between the positive and negative electrodes.

A sodium metal battery refers to a battery where the negative electrode is made of sodium metal, and sodium ions are used to migrate back and forth between the positive and negative electrodes.

In some embodiments, the secondary battery is a sodium metal battery with no negative electrode. The sodium metal battery with no negative electrode does not use a negative electrode active material. Instead, it solely uses a negative electrode current collector as the negative electrode. During the initial charging process, sodium deposition occurs on the negative electrode, and during discharge, sodium returns to the positive electrode, realizing a charge and discharge cycle. Due to the absence of a negative electrode material and the use of only a negative electrode current collector, a battery with no negative electrode can effectively overcome the drawbacks of a sodium metal battery and achieve a higher energy density compared to a battery with a metal sodium negative electrode.

Although a fluoroether solvent can effectively enhance the electrochemical stability of a battery, it causes more obvious side reactions in a battery with no negative electrode. In this application, with one or more of ionic liquid additive, amide compound additive, cation shielding additive, and alloy additive added in the fluoroether solvent, a stable SEI film is generated at the electrode/electrolyte interface. In addition, an effective barrier is constructed at the interface electric double layer to prevent the shuttle of certain ions and free radicals and side reactions, greatly improving the cycling performance and storage stability of the sodium battery with no negative electrode.

In some embodiments, the secondary battery includes a positive electrode plate, where the positive electrode plate includes a positive electrode active material, and the positive electrode active material includes one or more of Prussian blue compound, polyanionic compound, and layered oxide.

The transition metal in a layered transition metal oxide may be at least one of Mn, Fe, Ni, Co, Cr, Cu, Ti, Zn, V, Zr, and Ce. Alternatively, the layered transition metal oxide is, for example, NaxMO₂, where M is one or more of Ti, V, Mn, Co, Ni, Fe, Cr, and Cu, and 0 < x ≤ 1.

The polyanionic compound may be a compound with a metal ion, a transition metal ion, and a tetrahedral (YO₄)ₙ₋ anionic unit. The metal ion may optionally be one of sodium ion, lithium ion, potassium ion, and zinc ion; the transition metal may optionally be at least one of Mn, Fe, Ni, Co, Cr, Cu, Ti, Zn, V, Zr, and Ce; Y may optionally be at least one of P, S, and Si; and n represents the valence state of (YO₄)ⁿ⁻.

The Prussian blue compound may be a compound with a sodium ion, a transition metal ion, and a cyanide ion (CN-). The transition metal may be at least one of Mn, Fe, Ni, Co, Cr, Cu, Ti, Zn, V, Zr, and Ce. The Prussian blue compound may be, for example, NaₐMe_{b}Me'_{c}(CN)₆, where Me and Me' are each independently at least one of Ni, Cu, Fe, Mn, Co, and Zn, and 0 < a ≤ 2, 0 < b < 1, 0 < c < 1.

In some embodiments, the positive electrode active material includes one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, and NaMnFe(CN)₆.

The sodium metal battery with no negative electrode can exhibit good cycling performance in ether electrolyte, especially demonstrates excellent cycling performance when paired with a polyanionic positive electrode material, including sodium vanadium phosphate (Na₃V₂(PO₄)₃) and sodium iron pyrophosphate (Na₄Fe₃(PO₄)₂P₂O₇). A layered oxide has higher energy density and when combined with the electrolyte provided in this application, its defects of low coulombic efficiency and poor cycling performance when used in an ether electrolyte can be effectively solved.

In some embodiments, a surface of particles of the positive electrode active material is provided with a coating layer, where the coating layer includes one or more of carbon material (amorphous carbon, graphite, graphen, and the like), polyaniline, polypyrrole, Poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride.

The coating of the coating layer can effectively enhance the stability of the positive electrode active material, reduce the metal dissolution and particle fragmentation of the positive electrode active material during cycling, and improve the cycling performance and storage stability of the battery.

In some embodiments, the coating layer has a thickness of 2 nm-1000 nm.

An appropriately thick coating layer can effectively improve the performance and prevent the increase in resistance of the positive electrode film caused by an excessively thick coating layer, which would lead to a decrease in battery performance.

In some embodiments, the secondary battery includes a negative electrode plate, where the negative electrode plate includes a negative electrode current collector and a primer layer provided on at least one surface of the negative electrode current collector, and the primer layer includes one or more of carbon nanotube, graphite, graphene, silver composite carbon nanoparticle, and tin composite carbon nanoparticle.

In some embodiments, the primer layer has an areal density of 2 g/m²-50 g/m².

In some embodiments, the primer layer has a thickness of 1 µm-100 µm.

The primer layer within the foregoing ranges can effectively guide the negative electrode deposition, reduce the formation of sodium dendrites at the negative electrode, and improve the uniformity of sodium metal deposition. Moreover, a primer layer with an appropriate areal density and thickness can truly make the absence of a negative electrode possible, enhancing the energy density and safety performance of the battery.

In some embodiments, the current collector of the sodium metal battery with no negative electrode includes at least one of metal foil, metal foam current collector, metal mesh current collector, carbon felt current collector, carbon cloth current collector, carbon paper current collector, and composite current collector.

In some embodiments, the metal foil may optionally be copper foil, aluminum foil, stainless steel foil, and titanium foil, and the metal foam current collector may optionally be copper foam, aluminum foam, nickel foam, and the like. The metal mesh current collector may optionally be copper mesh, aluminum mesh, and stainless steel mesh. The composite current collector includes a current collector with a primer layer or a current collector with a polymer base film. The composite current collector may be a sandwich structure, with the polymer base film in the middle and metal foils on two sides. The composite current collector can also have a metal foil on one side of the polymer base film. The polymer base file may optionally be one of polyamide, polyterephthalate, polyimide, polyethylene, polypropylene, polystyrene, polyvinyl chloride, acrylonitrile-butadiene-styrene copolymer, polybutylene terephthalate ester, poly(p-phenylene terephthalamide), polypropylene, polyoxymethylene, epoxy resin, phenolic resin, polytetrafluoroethylene, polyvinylidene fluoride, silicone rubber, and polycarbonate. In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

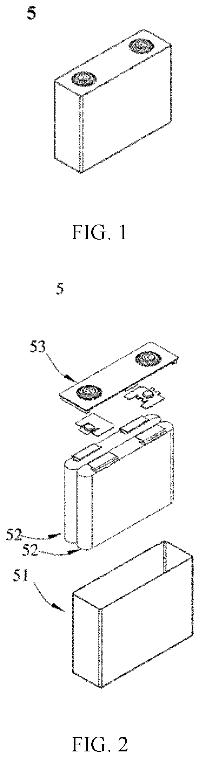

This application does not impose any special limitations on a shape of the secondary battery, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through winding or lamination. The electrode assembly 52 is enclosed in the accommodating cavity. The electrolyte infiltrates into the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

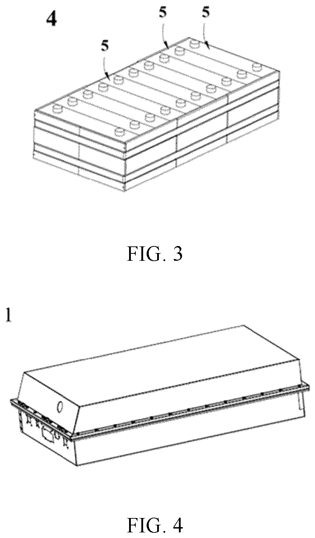

FIG. 3 shows a battery module 4 as an example. Referring to FIG. 3, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

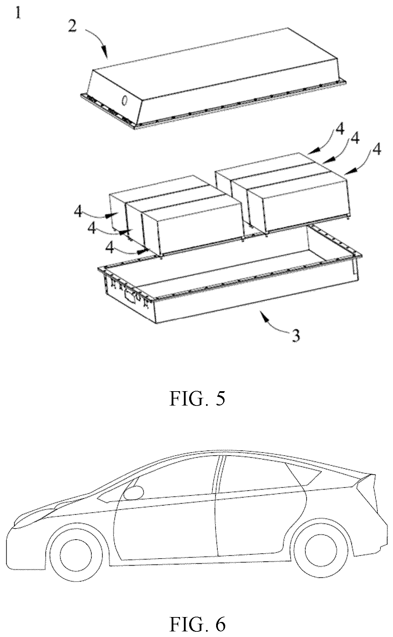

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually requires to be light and thin, and a secondary battery may be used as a power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### I. Preparation method

### 1. Preparation of positive electrode plate

A positive electrode active material sodium ferric pyrophosphate coated with carbon (Na₄Fe₃(PO₄)₂P₂O₇/C), a binder polyvinylidene fluoride (PVDF), and a conductive agent conductive carbon black (super-P) were dispersed at a mass ratio of 96%:2%:2% in a N-methylpyrrolidone (NMP) solvent and well stirred to prepare the positive electrode slurry. The prepared slurry was applied onto a surface of an aluminum foil with a coating machine according to the mass requirement per unit area of the positive electrode active material and then dried, followed by cold pressing of the coated electrode plate at a designed density of 2.5 g/cm³ with a cold pressing machine, to obtain a final positive electrode plate.

### 2. Preparation of negative electrode plate

Carbon nanotubes and sodium carboxymethyl cellulose were added at a mass ratio of 1:2 into water. The resulting mixture was stirred into a uniform slurry and the slurry was applied onto the negative electrode current collector, followed by drying and cutting to obtain a negative electrode plate with no negative structure, where the areal density of the primer layer was 10 g/m², and thickness of the primer layer was 5 µm.

### 3. Separator

A polyethylene film (PE separator) was used as a separator.

### 4. Preparation of electrolyte

In an argon atmosphere glove box (H₂O < 0.1 ppm, O₂ < 0.1 ppm), a 20wt.% of bis(fluorosulfonyl)imide sodium salt was dissolved in a 70wt.% 2,2,3,3-Tetrafluoro-1,4-dimethoxybutane organic solvent. Then, a 10wt.% 1,1,1-trifluorofluoro-N,N-dimethylmethanesulfonamide additive was dissolved in the organic solvent. The mixture was well stirred to obtain the electrolyte of Example 1.

### 5. Preparation of battery

The positive electrode plate, the separator, and the negative electrode plate were stacked in sequence so that the separator was sandwiched between the positive electrode plate and the negative electrode plate for separation, and the electrolyte was added, to assemble a button cell.

See Table 1 for specific parameters.

In Examples 2-39, the compositions of the electrolytes for secondary battery were adjusted, and the specific parameters are shown in Table 1. The mass ratios of the additives in Examples 15-19 were 1:1.

In Examples 40-43, the positive electrode active materials were Na[Cu_{1/9}Ni_{2/9}Fe_{1/3}Mn_{1/3}]O₂, and the specific parameters of other components are shown in Table 1.

In Examples 44-47, the positive electrode active materials were ZrO₂ coated Na_{2/3}Ni_{1/6}Mn_{2/3}Cu_{1/9}Mg_{1/18}O₂, and the specific parameters of other components are shown in Table 1.

In Comparative Examples 1-23, the compositions of the electrolytes or the positive electrode active materials of the secondary battery were adjusted, and the specific parameters are shown in Table 1. The preparation method was basically the same as that of Example 1.

### II. Battery performance test

### (1) Electrochemical stability window test

The window test of the electrolyte was carried out by using an electrochemical workstation with a test temperature of 25°C, a voltage range of 1.0 V-5.0 V, and a scanning rate of 0.1 mV/s. The use window of the electrolyte was determined based on the starting position of the peak potential in the CV curve. Cyclic voltammetry (CV) tests in this experiment were all performed on a 1470 multi-channel electrochemical workstation of the Solartron Company in the United Kingdom.

### (2) Room-temperature/high-temperature cycling performance

At 25/60°C and normal pressure (0.1 MPa), the battery was charged at a constant current of 0.1C to a voltage of 4 V (for layered oxide positive electrode) or 3.7 V (sodium ferric pyrophosphate positive electrode). Then, the battery was charged at a constant voltage of 4/3.7 V to a current of 0.01C, and then discharged at a constant current of 0.1 C to a voltage of 3.0 V. This was the first charge-discharge cycle. Then the battery was charged at a constant current of 1 C to a voltage of 4/3.7 V, then charged at a constant voltage of 4/3.7 V to a current of 0.1C, and then discharged at a constant current of 1C to a voltage of 3.0 V. The first cycle discharge capacity was defined as 100% and the number of cycles when the discharge capacity was 80% was recorded.

### (3) Room-temperature/high-temperature storage performance

At 25/60°C and normal pressure (0.1 MPa), the battery was charged at a constant current of 0.1C to 4 V (for layered oxide positive electrode) or 3.7 V (for sodium ferric pyrophosphate positive electrode), then charged at a constant voltage of 4/3.7 V to a current of 0.01C, and then discharged at a constant current of 0.1C to 3 V to obtain the pre-storage discharge capacity (Cd1). The sodium battery was charged at a constant current of 0.1C to 4/3.7 V at 25°C, and then charged at a constant voltage of 4/3.7 V until the current dropped to 0.01C, so as to charge the battery to 100% SOC through this step. The battery was stored in a constant temperature environment of 25/60°C and the number of storage days when the storage capacity retention rate of the battery was 80% was recorded.

The test method for the post-storage discharge capacity (Cdn) was as follows: at 25/60°C, the battery was charged at a constant current of 0.1C to 4/3.7 V, then charged at a constant voltage of 4/3.7 V until the current dropped to 0.01C, and then discharged at a constant current of 0.1C to 3 V to obtain the discharge capacity of the sodium battery after storage for n days, which was recorded as Cdn.
Storage capacity retention rate = post-storage discharge capacity (Cdn)/pre-storage discharge capacity(Cd1) * 100%.

The test results of the foregoing examples and comparative examples are shown in Table 1 and Table 2.

**Table 1**

| No. | Positive electrode active material | Sodium salt | Mass percentage | Fluoroether | Mass percentage | Additive | Mass percentage |
|---|---|---|---|---|---|---|---|
| Example 1 | Carbon coated sodium ferric pyrophosphate | Bis(fluorosulfonyl)imide sodium | 20% | 2,2,3,3-tetrafluoro-1,4-dimethoxybutane | 75% | 1-butyl-3-methylimidazole bis(fluorosulfonyl)imide salt | 5% |
| Example 2 | Carbon coated sodium ferric pyrophosphate | Bis(fluorosulfonyl)imide sodium | 20% | 2,2,3,3-tetrafluoro-1,4-dimethoxybutane | 75% | 1-butyl-3-methylimidazole bis(trifluoromethylsulfonyl)-amide salt | 5% |
| Example 3 | Carbon coated sodium ferric pyrophosphate | Bis(fluorosulfonyl)imide sodium | 20% | 2,2,3,3-tetrafluoro-1,4-dimethoxybutane | 75% | 1-alkyl-3-methylimidazole bis(fluorosulfonyl)amide salt | 5% |
| Example 4 | Carbon coated sodium ferric pyrophosphate | Bis(fluorosulfonyl)imide sodium | 20% | 2,2,3,3-tetrafluoro-1,4-dimethoxybutane | 75% | 1-alkyl-3-methylimidazole chloride | 5% |
| Example 5 | Carbon coated sodium ferric pyrophosphate | Bis(fluorosulfonyl)imide sodium | 20% | 2,2,3,3-tetrafluoro-1,4-dimethoxybutane | 75% | N-alkyl-N-methylpiperidine tetrafluoroborate | 5% |
| Example 6 | Carbon coated sodium ferric pyrophosphate | Bis(fluorosulfonyl)imide sodium | 20% | 2,2,3,3-tetrafluoro-1,4-dimethoxybutane | 75% | 1,1,1-trifluorofluoro-N,N-dimethylmethanesulfonamide | 5% |
| Example 7 | Carbon coated sodium ferric pyrophosphate | Bis(fluorosulfonyl)imide sodium | 20% | 2,2,3,3-tetrafluoro-1,4-dimethoxybutane | 75% | N,N-dimethylformamide | 5% |
| Example 8 | Carbon coated sodium ferric pyrophosphate | Bis(fluorosulfonyl)imide sodium | 20% | 2,2,3,3-tetrafluoro-1,4-dimethoxybutane | 75% | 2,3,6-trifluorobenzenesulfonamide | 5% |
| Example 9 | Carbon coated sodium ferric pyrophosphate | Bis(fluorosulfonyl)imide sodium | 20% | 2,2,3,3-tetrafluoro-1,4-dimethoxybutane | 75% | Lithium nitrate | 5% |
| Example 10 | Carbon coated sodium ferric pyrophosphate | Bis(fluorosulfonyl)imide sodium | 20% | 2,2,3,3-tetrafluoro-1,4-dimethoxybutane | 75% | Potassium bisoxaloborate | 5% |
| Example 11 | Carbon coated sodium ferric pyrophosphate | Bis(fluorosulfonyl)imide sodium | 20% | 2,2,3,3-tetrafluoro-1,4-dimethoxybutane | 75% | Lithium bis(trifluoromethanesulfonyl)-imide | 5% |
| Example 12 | Carbon coated sodium ferric pyrophosphate | Bis(fluorosulfonyl)imide sodium | 20% | 2,2,3,3-tetrafluoro-1,4-dimethoxybutane | 75% | Antimony trifluoride | 5% |
| Example 13 | Carbon coated sodium ferric pyrophosphate | Bis(fluorosulfonyl)imide sodium | 20% | 2,2,3,3-tetrafluoro-1,4-dimethoxybutane | 75% | Fumed silica | 5% |
| Example 14 | Carbon coated sodium ferric pyrophosphate | Bis(fluorosulfonyl)imide sodium | 20% | 2,2,3,3-tetrafluoro-1,4-dimethoxybutane | 75% | Tin difluoride | 5% |
| Example 15 | Carbon coated sodium ferric pyrophosphate | Bis(fluorosulfonyl)imide sodium | 20% | 2,2,3,3-tetrafluoro-1,4-dimethoxybutane | 75% | 1-butyl-3-methylimidazole bis(fluorosulfonyl)imide salt+1,1,1-trifluorofluoro-N,N-dimethylmethanesulfonamide | 5% |
| Example 16 | Carbon coated sodium ferric pyrophosphate | Bis(fluorosulfonyl)imide sodium | 20% | 2,2,3,3-tetrafluoro-1,4-dimethoxybutane | 75% | 1-butyl-3-methylimidazole chloride + lithium hexafluorophosphate | 5% |
| Example 17 | Carbon coated sodium ferric pyrophosphate | Bis(fluorosulfonyl)imide sodium | 20% | 2,2,3,3-tetrafluoro-1,4-dimethoxybutane | 75% | 1-butyl-3-methylimidazole chloride + antimony pentafluoride | 5% |
| Example 18 | Carbon coated sodium ferric pyrophosphate | Bis(fluorosulfonyl)imide sodium | 20% | 2,2,3,3-tetrafluoro-1,4-dimethoxybutane | 75% | 1,1,1-trifluorofluoro-N,N-dimethylmethanesulfonamide + lithium hexafluorophosphate | 5% |
| Example 19 | Carbon coated sodium ferric pyrophosphate | Bis(fluorosulfonyl)imide sodium | 20% | 2,2,3,3-tetrafluoro-1,4-dimethoxybutane | 75% | 1,1,1-trifluorofluoro-N,N-dimethylmethanesulfonamide + antimony pentafluoride | 5% |
| Example 20 | Carbon coated sodium ferric pyrophosphate | Bis(fluorosulfonyl)imide sodium | 20% | F3DEE | 75% | 1-butyl-3-methylimidazole/bis(fluorosulfonyl)imide | 5% |
| Example 21 | Carbon coated sodium ferric pyrophosphate | Bis(fluorosulfonyl)imide sodium | 20% | PFTHF | 75% | 1-butyl-3-methylimidazole/bis(fluorosulfonyl)imide | 5% |
| Example 22 | Carbon coated sodium ferric pyrophosphate | Bis(fluorosulfonyl)imide sodium | 20% | HME | 75% | 1-butyl-3-methylimidazole/bis(fluorosulfonyl)imide | 5% |
| Example 23 | Carbon coated sodium ferric pyrophosphate | Bis(fluorosulfonyl)imide sodium | 20% | F5DEE | 75% | 1-butyl-3-methylimidazole/bis(fluorosulfonyl)imide | 5% |
| Example 24 | Carbon coated sodium ferric pyrophosphate | Bis(fluorosulfonyl)imide sodium | 20% | F3DEE | 75% | 1,1,1-trifluorofluoro-N,N-dimethylmethanesulfonamide | 5% |
| Example 25 | Carbon coated sodium ferric pyrophosphate | Bis(fluorosulfonyl)imide sodium | 20% | PFTHF | 75% | 1,1,1-trifluorofluoro-N,N-dimethylmethanesulfonamide | 5% |
| Example 26 | Carbon coated sodium ferric pyrophosphate | Bis(fluorosulfonyl)imide sodium | 20% | HME | 75% | 1,1,1-trifluorofluoro-N,N-dimethylmethanesulfonamide | 5% |
| Example 27 | Carbon coated sodium ferric pyrophosphate | Bis(fluorosulfonyl)imide sodium | 20% | F5DEE | 75% | 1,1,1-trifluorofluoro-N,N-dimethylmethanesulfonamide | 5% |
| Example 28 | Carbon coated sodium ferric pyrophosphate | Bis(trifluoromethanesulfonyl)imide sodium | 20% | 1,2-bis(2,2-difluoroethoxy)eth ane | 75% | 1,1,1-trifluorofluoro-N,N-dimethylmethanesulfonamide | 5% |
| Example 29 | Carbon coated sodium ferric pyrophosphate | Sodium hexafluorophosphate | 20% | 1,2-bis(2,2-difluoroethoxy)eth ane | 75% | 1,1,1-trifluorofluoro-N,N-dimethylmethanesulfonamide | 5% |
| Example 30 | Carbon coated sodium ferric pyrophosphate | Sodium bisoxaloborate | 20% | 1,2-bis(2,2-difluoroethoxy)eth ane | 75% | 1,1,1-trifluorofluoro-N,N-dimethylmethanesulfonamide | 5% |
| Example 31 | Carbon coated sodium ferric pyrophosphate | Bis(fluorosulfonyl)imide sodium | 24% | 2,2,3,3-tetrafluoro-1,4-dimethoxybutane | 75% | 1,1,1-trifluorofluoro-N,N-dimethylmethanesulfonamide | 1% |
| Example 32 | Carbon coated sodium ferric pyrophosphate | Bis(fluorosulfonyl)imide sodium | 22% | 2,2,3,3-tetrafluoro-1,4-dimethoxybutane | 75% | 1,1,1-trifluorofluoro-N,N-dimethylmethanesulfonamide | 3% |
| Example 33 | Carbon coated sodium ferric pyrophosphate | Bis(fluorosulfonyl)imide sodium | 17% | 2,2,3,3-tetrafluoro-1,4-dimethoxybutane | 75% | 1,1,1-trifluorofluoro-N,N-dimethylmethanesulfonamide | 8% |
| Example 34 | Carbon coated sodium ferric pyrophosphate | Bis(fluorosulfonyl)imide sodium | 15% | 2,2,3,3-tetrafluoro-1,4-dimethoxybutane | 75% | 1,1,1-trifluorofluoro-N,N-dimethylmethanesulfonamide | 10% |
| Example 35 | Carbon coated sodium ferric pyrophosphate | Bis(fluorosulfonyl)imide sodium | 2% | 2,2,3,3-tetrafluoro-1,4-dimethoxybutane | 93% | 1,1,1-trifluorofluoro-N,N-dimethylmethanesulfonamide | 5% |
| Example 36 | Carbon coated sodium ferric pyrophosphate | Bis(fluorosulfonyl)imide sodium | 10% | 2,2,3,3-tetrafluoro-1,4-dimethoxybutane | 85% | 1,1,1-trifluorofluoro-N,N-dimethylmethanesulfonamide | 5% |
| Example 37 | Carbon coated sodium ferric pyrophosphate | Bis(fluorosulfonyl)imide sodium | 30% | 2,2,3,3-tetrafluoro-1,4-dimethoxybutane | 65% | 1,1,1-trifluorofluoro-N,N-dimethylmethanesulfonamide | 5% |
| Example 38 | Carbon coated sodium ferric pyrophosphate | Bis(fluorosulfonyl)imide sodium | 50% | 2,2,3,3-tetrafluoro-1,4-dimethoxybutane | 45% | 1,1,1-trifluorofluoro-N,N-dimethylmethanesulfonamide | 5% |
| Example 39 | Carbon coated sodium ferric pyrophosphate | Bis(fluorosulfonyl)imide sodium | 70% | 2,2,3,3-tetrafluoro-1,4-dimethoxybutane | 25% | 1,1,1-trifluorofluoro-N,N-dimethylmethanesulfonamide | 5% |
| Example 40 | Na[Cu_{1/9}Ni_{2/9}Fe_{1/3}Mn_{1/3}]O₂ | Bis(fluorosulfonyl)imide sodium | 20% | 2,2,3,3-tetrafluoro-1,4-dimethoxybutane | 75% | 1-butyl-3-methylimidazole/bis(fluorosulfonyl)imide | 5% |
| Example 41 | Na[Cu_{1/9}Ni_{2/9}Fe_{1/3}Mn_{1/3}]O₂ | Bis(fluorosulfonyl)imide sodium | 20% | 2,2,3,3-tetrafluoro-1,4-dimethoxybutane | 75% | 1,1,1-trifluorofluoro-N,N-thylmethanesulfonamide | 5% |
| Example 42 | Na[Cu_{1/9}Ni_{2/9}Fe_{1/3}Mn_{1/3}]O₂ | Bis(fluorosulfonyl)imide sodium | 20% | 2,2,3,3-tetrafluoro-1,4-dimethoxybutane | 75% | Lithium nitrate | 5% |
| Example 43 | Na[Cu_{1/9}Ni_{2/9}Fe_{1/3}Mn_{1/3}]O₂ | Bis(fluorosulfonyl)imide sodium | 20% | 2,2,3,3-tetrafluoro-1,4-dimethoxybutane | 75% | Antimony trifluoride | 5% |
| Example 44 | ZrO₂ coated Na_{2/3}Ni_{1/6}Mn_{2/3}Cu_{1/9}Mg_{1/18}O₂ | Bis(fluorosulfonyl)imide sodium | 20% | 2,2,3,3-tetrafluoro-1,4-dimethoxybutane | 75% | 1-butyl-3-methylimidazole bis(fluorosulfonyl)imide | 5% |
| Example 45 | ZrO₂ coated Na_{2/3}Ni_{1/6}Mn_{2/3}Cu_{1/9}Mg_{1/18}O₂ | Bis(fluorosulfonyl)imide sodium | 20% | 2,2,3,3-tetrafluoro-1,4-dimethoxybutane | 75% | 1,1,1-trifluorofluoro-N,N-dimethylmethanesulfonamide | 5% |
| Example 46 | ZrO₂ coated Na_{2/3}Ni_{1/6}Mn_{2/3}Cu_{1/9}Mg_{1/18}O₂ | Bis(fluorosulfonyl)imide sodium | 20% | 2,2,3,3-tetrafluoro-1,4-dimethoxybutane | 75% | Lithium hexafluorophosphate | 5% |
| Example 47 | ZrO₂ coated Na_{2/3}Ni_{1/6}Mn_{2/3}Cu_{1/9}Mg_{1/18}O₂ | Bis(fluorosulfonyl)imide sodium | 20% | 2,2,3,3-tetrafluoro-1,4-dimethoxybutane | 75% | Tin tetrafluoride | 5% |
| Comparative Example 1 | Carbon coated sodium ferric pyrophosphate | Bis(fluorosulfonyl)imide sodium | 25% | 2,2,3,3-tetrafluoro-1,4-dimethoxybutane | 75% | / | / |
| Comparative Example 2 | Carbon coated sodium ferric pyrophosphate | Bis(fluorosulfonyl)imide sodium | 20% | 2,2,3,3-tetrafluoro-1,4-dimethoxybutane | 80% | / | / |
| Comparative Example 3 | Carbon coated sodium ferric pyrophosphate | Bis(fluorosulfonyl)imide sodium | 25% | F3DEE | 75% | / | / |
| Comparative Example 4 | Carbon coated sodium ferric pyrophosphate | Bis(fluorosulfonyl)imide sodium | 25% | PFTHF | 75% | / | / |
| Comparative Example 5 | Carbon coated sodium ferric pyrophosphate | Bis(fluorosulfonyl)imide sodium | 25% | HME | 75% | / | / |
| Comparative Example 6 | Carbon coated sodium ferric pyrophosphate | Bis(fluorosulfonyl)imide sodium | 25% | F5DEE | 75% | / | / |
| Comparative Example 7 | Carbon coated sodium ferric pyrophosphate | Bis(trifluoromethanesulfonyl)imide sodium | 25% | 2,2,3,3-tetrafluoro-1,1-dimethoxybutane | 75% | / | / |
| Comparative Example 8 | Carbon coated sodium ferric pyrophosphate | Sodium hexafluorophosphate | 25% | 2,2,3,3-tetrafluoro-1,2-dimethoxybutane | 75% | / | / |
| Comparative Example 9 | Carbon coated sodium ferric pyrophosphate | Sodium bisoxaloborate | 25% | 2,2,3,3-tetrafluoro-1,3-dimethoxybutane | 75% | / | / |
| Comparative Example 10 | Carbon coated sodium ferric pyrophosphate | Bis(fluorosulfonyl)imide sodium | 2% | 2,2,3,3-tetrafluoro-1,4-dimethoxybutane | 98% | / | / |
| Comparative Example 11 | Carbon coated sodium ferric pyrophosphate | Bis(fluorosulfonyl)imide sodium | 10% | 2,2,3,3-tetrafluoro-1,4-dimethoxybutane | 90% | / | / |
| Comparative Example 12 | Carbon coated sodium ferric pyrophosphate | Bis(fluorosulfonyl)imide sodium | 30% | 2,2,3,3-tetrafluoro-1,4-dimethoxybutane | 70% | / | / |
| Comparative Example 13 | Carbon coated sodium ferric pyrophosphate | Bis(fluorosulfonyl)imide sodium | 50% | 2,2,3,3-tetrafluoro-1,4-dimethoxybutane | 50% | / | / |
| Comparative Example 14 | Carbon coated sodium ferric pyrophosphate | Bis(fluorosulfonyl)imide sodium | 70% | 2,2,3,3-tetrafluoro-1,4-dimethoxybutane | 30% | / | / |
| Comparative Example 15 | Na[Cu_{1/9}Ni_{2/9}Fe_{1/3}Mn_{1/3}]O₂ | Bis(fluorosulfonyl)imide sodium | 20% | 2,2,3,3-tetrafluoro-1,4-dimethoxybutane | 80% | / | / |
| Comparative Example 16 | ZrO₂ coated Na_{2/3}Ni_{1/6}Mn_{2/3}Cu_{1/9}Mg_{1/18}O₂ | Bis(fluorosulfonyl)imide sodium | 20% | 2,2,3,3-tetrafluoro-1,4-dimethoxybutane | 80% | / | / |
| Comparative Example 17 | Carbon coated sodium ferric pyrophosphate | Bis(fluorosulfonyl)imide sodium | 20% | Ethylene glycol dimethyl ether | 75% | 1-butyl-3-methylimidazole/bis(fluorosulfonyl)imide | 5% |
| Comparative Example 18 | Carbon coated sodium ferric pyrophosphate | Bis(fluorosulfonyl)imide sodium | 20% | Ethylene glycol dimethyl ether | 80% | / | / |
| Comparative Example 19 | Na[Cu_{1/9}Ni_{2/9}Fe_{1/3}Mn_{1/3}]O₂ | Bis(fluorosulfonyl)imide sodium | 20% | Ethylene glycol dimethyl ether | 80% | / | / |
| Comparative Example 20 | ZrO₂ coated Na_{2/3}Ni_{1/6}Mn_{2/3}Cu_{1/9}Mg_{1/18}O₂ | Bis(fluorosulfonyl)imide sodium | 20% | Ethylene glycol dimethyl ether | 80% | / | / |
| Comparative Example 21 | Carbon coated sodium ferric pyrophosphate | Bis(fluorosulfonyl)imide sodium | 20% | Ethylene glycol diethyl ether | 75% | / | / |
| Comparative Example 22 | Na[Cu_{1/9}Ni_{2/9}Fe_{1/3}Mn_{1/3}]O₂ | Bis(fluorosulfonyl)imide sodium | 20% | Ethylene glycol diethyl ether | 75% | / | / |
| Comparative Example 23 | ZrO₂ coated Na_{2/3}Ni_{1/6}Mn_{2/3}Cu_{1/9}Mg_{1/18}O₂ | Bis(fluorosulfonyl)imide sodium | 20% | Ethylene glycol diethyl ether | 75% | / | / |

**Table 2**

| No. | Electrochemic al stability window width (V, 25°C) | Cycles for 80% capacity retention rate/cycle (25°C, 1C charge-discharge rate) | Cycles for 80% capacity retention rate/cycle (60°C, 1C charge-discharge rate) | Storage days at room temperature for 80% capacity retention rate | Storage days at high temperature for 80% capacity retention rate |
|---|---|---|---|---|---|
| Example 1 | 4.2 | 750 | 300 | 87 | 55 |
| Example 2 | 4.3 | 1000 | 600 | 109 | 68 |
| Example 3 | 4.3 | 950 | 250 | 96 | 40 |
| Example 4 | 4.1 | 600 | 100 | 67 | 28 |
| Example 5 | 4.3 | 700 | 100 | 82 | 36 |
| Example 6 | 4.2 | 2000 | 900 | 323 | 201 |
| Example 7 | 4.1 | 1200 | 350 | 164 | 87 |
| Example 8 | 4.2 | 1000 | 300 | 168 | 80 |
| Example 9 | 4.0 | 700 | 150 | 123 | 43 |
| Example 10 | 4.1 | 750 | 200 | 118 | 58 |
| Example 11 | 4.1 | 700 | 200 | 101 | 52 |
| Example 12 | 4.0 | 800 | 300 | 123 | 63 |
| Example 13 | 4.2 | 900 | 250 | 137 | 54 |
| Example 14 | 4.0 | 800 | 300 | 130 | 48 |
| Example 15 | 4.2 | 2500 | 1100 | 353 | 254 |
| Example 16 | 4.1 | 500 | 150 | 62 | 46 |
| Example 17 | 4.1 | 600 | 150 | 71 | 42 |
| Example 18 | 4.3 | 1700 | 850 | 284 | 157 |
| Example 19 | 4.2 | 1800 | 800 | 291 | 165 |
| Example 20 | 4.4 | 1400 | 500 | 163 | 67 |
| Example 21 | 4.5 | 1000 | 200 | 138 | 57 |
| Example 22 | 4.4 | 800 | 300 | 156 | 79 |
| Example 23 | 4.2 | 1200 | 250 | 135 | 42 |
| Example 24 | 4.3 | 1500 | 650 | 174 | 86 |
| Example 25 | 4.4 | 1000 | 650 | 136 | 78 |
| Example 26 | 4.3 | 950 | 400 | 166 | 89 |
| Example 27 | 4.1 | 1250 | 300 | 146 | 45 |
| Example 28 | 4.2 | 1000 | 250 | 98 | 57 |
| Example 29 | 4.2 | 1200 | 200 | 91 | 43 |
| Example 30 | 4.2 | 850 | 150 | 76 | 37 |
| Example 31 | 4.1 | 1000 | 200 | 129 | 54 |
| Example 32 | 4.1 | 1800 | 800 | 267 | 145 |
| Example 33 | 4.1 | 2050 | 1000 | 318 | 241 |
| Example 34 | 4.0 | 1900 | 950 | 309 | 257 |
| Example 35 | 3.9 | 1500 | 800 | 228 | 176 |
| Example 36 | 4.0 | 1800 | 800 | 269 | 164 |
| Example 37 | 4.1 | 2000 | 850 | 308 | 223 |
| Example 38 | 4.2 | 2150 | 950 | 338 | 218 |
| Example 39 | 4.4 | 2300 | 1000 | 330 | 231 |
| Example 40 | 4.2 | 450 | 200 | 65 | 42 |
| Example 41 | 4.2 | 800 | 500 | 148 | 97 |
| Example 42 | 4.0 | 300 | 100 | 52 | 30 |
| Example 43 | 4.0 | 200 | 50 | 41 | 21 |
| Example 44 | 4.2 | 650 | 250 | 84 | 58 |
| Example 45 | 4.2 | 900 | 650 | 167 | 122 |
| Example 46 | 4.0 | 450 | 250 | 64 | 38 |
| Example 47 | 4.0 | 250 | 100 | 47 | 19 |
| Comparative Example 1 | 4.1 | 600 | 100 | 23 | 13 |
| Comparative Example 2 | 4.1 | 600 | 100 | 37 | 10 |
| Comparative Example 3 | 4.2 | 500 | 100 | 19 | 8 |
| Comparative Example 4 | 4.3 | 400 | 50 | 13 | 7 |
| Comparative Example 5 | 4.3 | 500 | 100 | 22 | 11 |
| Comparative Example 6 | 4.1 | 300 | 50 | 14 | 9 |
| Comparative Example 7 | 4.2 | 700 | 200 | 12 | 8 |
| Comparative Example 8 | 4.2 | 600 | 150 | 17 | 10 |
| Comparative Example 9 | 4.2 | 500 | 100 | 9 | 3 |
| Comparative Example 10 | 3.8 | 500 | 50 | 13 | 8 |
| Comparative Example 11 | 3.9 | 550 | 100 | 17 | 10 |
| Comparative Example 12 | 4.0 | 800 | 250 | 46 | 20 |
| Comparative Example 13 | 4.2 | 1300 | 300 | 55 | 21 |
| Comparative Example 14 | 4.4 | 1800 | 500 | 103 | 34 |
| Comparative Example 15 | 3.9 | 100 | 50 | 4 | 2 |
| Comparative Example 16 | 3.9 | 100 | 50 | 7 | 5 |
| Comparative Example 17 | 4.0 | 1000 | 200 | 251 | 69 |
| Comparative Example 18 | 3.8 | 700 | 150 | 65 | 8 |
| Comparative Example 19 | 3.8 | 50 | 0 | 3 | 1 |
| Comparative Example 20 | 3.8 | 50 | 0 | 2 | 1 |
| Comparative Example 21 | 3.9 | 600 | 100 | 45 | 11 |
| Comparative Example 22 | 3.9 | 150 | 50 | 12 | 4 |
| Comparative Example 23 | 3.9 | 200 | 50 | 15 | 5 |

It can be seen from Table 1 and Table 2 that the electrolyte of the sodium battery with no negative electrode in Examples 1 to 47 includes a fluoroether solvent and an additive, where the fluoroether solvent is used as the main solvent of the electrolyte, and the additive is selected from one or more of ionic liquid additive, amide compound additive, cation shielding additive, and alloy additive. In Examples 1-5, the ionic liquid additive is used as the additive; in Examples 6-8, the amide compound additive is used as the additive; in Examples 9-11, the cation shielding additive is used as the electrolyte additive; in Examples 12-14, the alloy additive is used as the additive; and in Examples 15-19, one or a combination of more is selected from ionic liquid additive, amide compound additive, cation shielding additive, and alloy additive is used as the additive. Compared with Comparative Example 18 in which ether solvent is used as the main solvent, in Examples 1-47, the batteries exhibit wider electrochemical stability window, and the electrolytes have better electrochemical stability.

In addition, it can be seen from the comparison between Examples 1-19 and Comparative Examples 1 and 2, comparison between Examples 20-27 and Comparative Examples 3-6, comparison between Examples 28-30 and Comparative Examples 7-9, comparison between Examples 35-39 and Comparative Examples 10-14, comparison between Examples 40-43 and Comparative Example 15, comparison between Examples 44-47 and Comparative Example 15, that the addition of an additive in the electrolyte can significantly improve the storage performance of a battery with no negative electrode at both room temperature and high temperatures.

It can be seen from Examples 1-14 that an amide compound additive provides more significant improvement in the cycling and storage performance of a battery with no negative electrode. It can be seen from Examples 1-5 that 1-butyl-3-methylimidazole bis(trifluoromethylsulfonyl)amide salt, 1-alkyl-3-methylimidazole bis(fluorosulfonyl)amide salt, 1-butyl-3-methylimidazole bis(fluorosulfonyl)imide salt, and N-alkyl-N-methylpiperidine tetrafluoroborate can provide more effective improvement than 1-alkyl-3-methylimidazole chloride in the cycling and storage performance of a battery with no negative electrode. 1-butyl-3-methylimidazole bis(trifluoromethylsulfonyl)amide salt provides most significant improvement in the cycling and storage performance of a battery with no negative electrode at room temperature and high temperatures. It can be seen from Examples 9-11 that among the cation shielding additives, potassium bisoxaloborate provides better improvement in the cycling and storage performance of a battery with no negative electrode. It can be seen from Examples 12 to 14 that among the alloy additives, fumed silica can provide more effective improvement in the cycling and storage performance of a battery.

It can be seen from Examples 15 to 19 that the addition of two different types of additives can also provide effective improvement in the cycling and storage performance of a battery. In Example 17, the addition of both the ionic liquid additive 1-butyl-3-methylimidazole bis(fluorosulfonyl)imide salt and the amide compound additive 1,1,1-trifluorofluoro-N,N-dimethylmethanesulfonamide exhibits a synergistic effect. Compared with the battery with no negative electrode and no additive in Comparative Example 1, at room temperature, the number of cycles of the battery with no negative electrode when reaching 80% capacity retention rate is increased by 3 times, and the number of storage days is increased by 5 times, and at high temperatures, the number of cycles is increased by 10 times, and the number of storage days is increased by 18 times.

It can be seen from Examples 20-27 that the additives provided in this application are suitable for all kinds of fluoroether solvents, and can effectively improve the cycling and storage performance of the batteries with electrolyte systems using different fluoroether solvents as the main solvent, improving the electrochemical stability and cycling life of the batteries.

It can be seen from Examples 28-30 that the electrolyte provided in this application is suitable for a variety of different sodium salts, and the batteries can all show excellent cycling and storage performance.

It can be seen from Examples 6 and 31-34 that when the mass percentage of the additive is 1-10% based on the total mass of the electrolyte, the batteries can all exhibit a wider electrochemical window and excellent cycling and storage performance at room temperature and high temperatures.

It can be seen from Examples 6 and 35-39 that when the mass percentage of the fluoroether solvent is 20%-90% based on the total mass of the electrolyte, the batteries can all exhibit a wider electrochemical window and excellent cycling and storage performance at room temperature and high temperatures. It can be seen from Examples 6 and 31-39 that when the mass percentage of the electrolytic salt is 2-70% based on the total mass of the electrolyte, the batteries can all exhibit a wider electrochemical window and excellent cycling and storage performance at room temperature and high temperatures. In addition, it can be seen from the comparison between Examples 6, 31-36, and 37-39 that when the mass percentage of the electrolytic salt is 20%-70%, the battery demonstrates superior electrochemical window stability and cycling and storage performance.

It can be seen from the comparison between Examples 40-47 and Comparative Examples 18-23 that the electrolyte provided in this application is suitable for a variety of cathode materials. Whether for a polyanionic compound or layered oxide, the electrolyte can effectively improve the electrochemical stability window width and cycling performance and storage stability of the battery.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. An electrolyte for secondary battery, **characterized by** comprising a fluoroether solvent and an additive, wherein the additive comprises one or more of ionic liquid additive, amide compound additive, cation shielding additive, and alloy additive.

2. The electrolyte according to claim 1, **characterized in that** a cation of the ionic liquid additive comprises one or more of nitrogen-containing onium ion and phosphorus-containing onium ion; and an anion of the ionic liquid additive comprises one or more of halogen ion, phosphate ion, borate ion, sulfonimide compound anion, and sulfonylamide compound anion.

3. The electrolyte according to claim 1 or 2, **characterized in that** the cation of the ionic liquid additive comprises one or more of 1-butyl-3-methylimidazolium, 1-benzyl-3-methylimidazolium, 3-methyl-1-ethoxycarbonylmethylimidazolium, 1-alkyl-3-methylimidazolium, 1-[(trimethylsilyl)methyl]benzotriazolium, N-alkyl-N-methylpiperidinium, 5-azoniumspiro[4.4]nonane, trihexyl(tetradecyl)phosphine ion, tetrabutylphosphine ion, and n-butyl-N-methylpyrrolidinium, and optionally 1-benzyl-3-methylimidazolium or 1-alkyl-3-methylimidazolium.

4. The electrolyte according to any one of claims 1 to 3, **characterized in that** the anion of the ionic liquid additive comprises one or more of chloride ion, bromide ion, iodide ion, hexafluorophosphate, tetrafluoroborate, dicyandiamide anion, bis(fluorosulfonyl)amide anion, bis(trifluoromethylsulfonyl)amide anion, bis(fluorosulfonyl)imide anion, and bis(trifluoromethylsulfonyl)imide anion, and optionally one or more of chloride ion, bis(fluorosulfonyl)amide anion, bis(trifluoromethylsulfonyl)amide anion, bis(fluorosulfonyl)imide anion, and bis(trifluoromethylsulfonyl)imide anion.

5. The electrolyte according to any one of claims 1 to 3, **characterized in that** the ionic liquid additive comprises one or more selected from 1-butyl-3-methylimidazole-bis(fluorosulfonyl)imide salt, 1-butyl-3-methylimidazole-bis(trifluoromethylsulfonyl)amide salt, 1-benzyl-3-methylimidazole-bis(fluorosulfonyl)imide salt, 1-benzyl-3-methylimidazole-bis(trifluoromethylsulfonyl)amide salt, 1-alkyl-3-methylimidazole-bis (fluorosulfonyl)imide salt, 1-alkyl-3-methylimidazole-bis(trifluoromethylsulfonyl)amide salt, 1-alkyl-3-methylimidazole-chloride salt, and N-alkyl-N-methylpiperidine-tetrafluoroborate.

6. The electrolyte according to any one of claims 1 to 5, **characterized in that** the amide compound additive comprises one or more of compounds represented by formula I, formula II, or formula III, 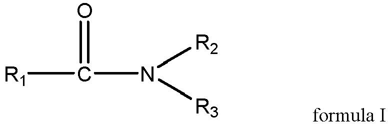 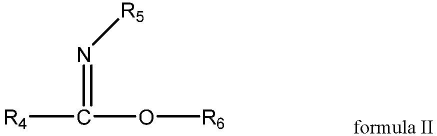 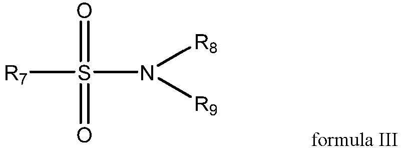 wherein R₁ to R₉ are each independently selected from hydrogen, silyl group, ketone carbonyl group, C₁-C₃ alkyl group unsubstituted or substituted by at least one fluorine atom, and aryl group unsubstituted or substituted by at least one fluorine atom.

7. The electrolyte according to any one of claims 1 to 6, **characterized in that** the amide compound additive comprises one or more of N,N-dimethylformamide, N,N-dimethylacetamide, N,N-dimethylacetoacetamide, 1,1,1-trifluorofluoro-N,N-dimethylform sulfonamide, N,O-bis(trimethylsilyl)trifluoroacetamide, 2,3,6-trifluorobenzenesulfonamide, N,N-dimethyl-4-fluorobenzenesulfonamide, and N-methyl-N-trimethylsilane trifluoroacetamide.

8. The electrolyte according to any one of claims 1 to 7, **characterized in that** the cation shielding additive comprises a salt whose cation is an alkali metal element or an alkaline earth metal element.

9. The electrolyte according to any one of claims 1 to 8, **characterized in that** the cation shielding additive comprises one or more of lithium nitrate, lithium perchlorate, lithium hexafluorophosphate, lithium tetrafluoroborate, lithium bisoxaloborate, lithium difluoroxaloborate, lithium bis(fluorosulfonyl)imide, lithium bis(trifluoromethanesulfonyl)imide, potassium hexafluorophosphate, potassium bis-oxaloborate, potassium difluoro-oxaloborate, potassium bis(fluorosulfonyl)imide, potassium bis(trifluoromethylsulfonyl)imide, cesium nitrate, cesium hexafluorophosphate, cesium bis(fluorosulfonyl)imide, cesium chloride, cesium bromide, calcium nitrate, strontium nitrate, and barium nitrate.

10. The electrolyte according to any one of claims 1 to 9, **characterized in that** the alloy additive is a compound containing an element from family IVA or family VA.

11. The electrolyte according to any one of claims 1 to 10, **characterized in that** the alloy additive comprises one or more of antimony trifluoride, antimony pentafluoride, tin difluoride, tin tetrafluoride, bismuth trichloride, and fumed silica.

12. The electrolyte according to any one of claims 1 to 11, **characterized in that** a mass percentage of the additive is 1-10% based on total mass of the electrolyte.

13. The electrolyte according to any one of claims 1 to 12, **characterized in that** the ether solvent is a fluoroether solvent, and the fluoroether solvent comprises a compound represented by formula IV or a crown ether substituted by a fluorine atom, 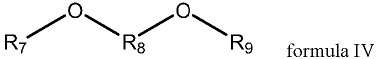 wherein R₇, R₈, and R₉ are each independently selected from hydrogen, and a straight-chain or branched-chain C₁-C₆ alkyl group unsubstituted or substituted by fluorine or a hydroxyl group, at least one of R₇, R₈, and R₉ contains a fluorine atom, and R₇ and R₉ optionally are combined with oxygen to which R₇ and R₉ are connected and R₈ connected to the oxygen, to generate a 5- or 6-membered saturated heterocyclic ring, wherein at least one hydrogen atom on the ring is substituted by fluorine or a fluoroalkyl group.

14. The electrolyte according to any one of claims 1 to 13, **characterized in that** the fluoroether solvent comprises one or more of 2,2,3,3-tetrafluoro-1,4-dimethoxybutane, 2-(2-ethoxyethoxy)-1,1,1-trifluoroethane, 1,2-bis(2,2-difluoroethoxy)ethane, 2-(2-(2,2-difluoroethoxy)ethoxy)-1,1,1-trifluoroethane, 1,2-bis(2,2,2-trifluoroethoxy)ethane, 1,1,1,3,3,3-hexafluoroisopropylmethyl ether, 2,2,2-trifluoroethyl-1,1,2,3,3,3-hexafluoropropyl ether, 2,2-bis(trifluoromethyl)-1,3-dioxolane, 2,2-dimethoxy-4-(Trifluoromethyl)-1,3-dioxopentane, 2-ethoxy-4-(trifluoromethyl)-1,3-dioxopentane, octafluorotetrahydrofuran, ethylene glycol dimethyl ether substituted by at least one fluorine atom, diethylene glycol dimethyl ether substituted by at least one fluorine atom, triethylene glycol dimethyl ether substituted by at least one fluorine atom, tetraethylene glycol dimethyl ether substituted by at least one fluorine atom, diethylene glycol diethyl ether substituted by at least one fluorine atom, diisopropyl ether substituted by at least one fluorine atom, dibutyl ether substituted by at least one fluorine atom, diethylene glycol dibutyl ether substituted by at least one fluorine atom, 1,4-diethoxybutane substituted by at least one fluorine atom, 15-crown ether-5 substituted by at least one fluorine atom, 12-crown ether-4 substituted by at least one fluorine atom, and 18-crown ether-6 substituted by at least one fluorine atom; and optionally at least one of 2,2,3,3-tetrafluoro-1,4-dimethoxybutane, 2,2-dimethoxy-4-(trifluoromethyl)-1,3-dioxopentane.

15. The electrolyte according to any one of claims 1 to 14, **characterized in that** a mass percentage of the fluoroether solvent is 20%-90% based on the total mass of the electrolyte.

16. The electrolyte according to any one of claims 1 to 15, **characterized in that** the electrolytic salt is a sodium salt, wherein the sodium salt comprises one or more of sodium nitrate, sodium perchlorate, sodium hexafluorophosphate, sodium tetrafluoroborate, sodium tetrafluoroyttrate, sodium hexafluoroarsenate, sodium acetate, sodium trifluoroacetate, sodium bisoxaloborate, sodium difluoroxaloborate, tetrafluoroborate sodium phenylborate, sodium trifluoromethanesulfonate, sodium bis(fluorosulfonyl)imide, sodium bis(trifluoromethanesulfonyl)imide, and sodium (n-perfluorobutylsulfonyl)imide.

17. The electrolyte according to any one of claims 1 to 16, **characterized in that** a mass percentage of the electrolytic salt is 2%-70%, optionally 20%-70%, based on the total mass of the electrolyte.

18. A secondary battery, **characterized by** comprising the electrolyte according to any one of claims 1 to 17.

19. The secondary battery according to claim 18, **characterized in that** the secondary battery comprises one or more of lithium metal battery and sodium metal battery.

20. The secondary battery according to claim 18 or 19, **characterized in that** the secondary battery is a sodium metal battery with no negative electrode.

21. The secondary battery according to any one of claims 18 to 20, **characterized in that** the secondary battery comprises a positive electrode plate, wherein the positive electrode plate comprises a positive electrode active material, and the positive electrode active material comprises one or more of Prussian blue compound, polyanionic compound, and layered oxide.

22. The secondary battery according to any one of claims 18 to 21, **characterized in that** a surface of particles of the positive electrode active material is provided with a coating layer, wherein the coating layer comprises one or more of carbon material, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride.

23. The secondary battery according to any one of claims 18 to 22, **characterized in that** the coating layer has a thickness of 2 nm-1000 nm.

24. The secondary battery according to any one of claims 18 to 23, **characterized in that** the secondary battery comprises a negative electrode plate, wherein the negative electrode plate comprises a negative electrode current collector and a primer layer provided on at least one surface of the negative electrode current collector, and the primer layer comprises one or more of carbon nanotube, graphite, graphene, silver composite carbon nanoparticle, and tin composite carbon nanoparticle.

25. The secondary battery according to any one of claims 18 to 24, **characterized in that** the negative electrode current collector comprises at least one of metal foil, metal foam current collector, metal mesh current collector, carbon felt current collector, carbon cloth current collector, carbon paper current collector, and composite current collector.

26. The secondary battery according to claim 24 or 25, **characterized in that** the primer layer has an areal density of 2 g/m²-50 g/m².

27. The secondary battery according to claim 24 or 25, **characterized in that** the primer layer has a thickness of 1 µm-100 µm.

28. A battery module, **characterized by** comprising the secondary battery according to any one of claims 18 to 27.

29. A battery pack, **characterized by** comprising the secondary battery according to any one of claims 18 to 27 or the battery module according to claim 27.

30. An electric apparatus, **characterized by** comprising at least one of the secondary battery according to any one of claims 18 to 27, the battery module according to claim 28, and the battery pack according to claim 29.
